(19) **Europäisches Patentamt**

**European Patent Office**

**Office européen des brevets**

(11) Numéro de publication : **0 349 440 B1**

(12) **FASCICULE DE BREVET EUROPEEN**

(45) Date de publication du fascicule du brevet :
**02.06.93 Bulletin 93/22**

(51) Int. Cl.⁵ : **B32B 27/08, B65D 65/40**

(21) Numéro de dépôt : **89401883.7**

(22) Date de dépôt : **30.06.89**

(54) **Matériaux polymères multicouches à propriétés barrière.**

Le dossier contient des informations techniques présentées postérieurement au dépôt de la demande et ne figurant pas dans le présent fascicule.

(30) Priorité : **30.06.88 FR 8808856**

(43) Date de publication de la demande :
**03.01.90 Bulletin 90/01**

(45) Mention de la délivrance du brevet :
**02.06.93 Bulletin 93/22**

(84) Etats contractants désignés :
**AT BE CH DE ES FR GB GR IT LI LU NL SE**

(56) Documents cités :
**EP-A- 0 174 611**
**GB-A- 2 029 766**

(73) Titulaire : **ELF ATOCHEM S.A.**
**4 & 8, Cours Michelet La Défense 10**
**F-92800 Puteaux (FR)**

(72) Inventeur : **Wirth, René**
**4, Rue Berthelot**
**F-62300 Lens (FR)**

(74) Mandataire : **Rochet, Michel et al**
**ELF ATOCHEM S.A. Département Propriété**
**Industrielle 4-8, Cours Michelet La Défense 10**
**- Cedex 42**
**F-92091 Paris-La-Défense (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 349 440 B1

Jouve, 18, rue Saint-Denis, 75001 PARIS

## Description

La présente invention concerne des matériaux polymères thermoplastiques multicouches ayant des propriétés barrière.

Pour de nombreuses applications, en particulier dans l'industrie alimentaire, on cherche à obtenir des polymères thermoplastiques ayant des propriétés barrière vis-à-vis des liquides et des gaz, en particulier de l'oxygène. Ces polymères sont utiles pour la fabrication d'emballages ou de récipients (gobelet par exemple). On connaît des polymères ayant des propriétés barrière, tels que par exemple les copolymères d'éthylène et d'alcool polyvinylique, les copolymères d'acrylate de méthyle et d'acrylonitrile, les copolymères d'éthylène et d'acétate de vinyle hydrolysé, mais ces polymères ont de mauvaises propriétés mécaniques. On a donc été amené à préparer des matériaux multicouches de façon à renforcer le polymère ayant des propriétés barrière, cependant plus le nombre de couches est élevé plus la préparation de ces matériaux est rendue difficile. Par exemple quand on les prépare par extrusion, il est difficile d'ajuster la position et le débit des différents têtes d'extrusion. Quant on les prépare par moulage par compression à chaud sur une presse hydraulique, la mise en place de nombreuses couches homogènes est coûteuse et difficile.

On a déjà proposé de préparer un matériau polymère à propriétés barrière comprenant trois couches. Par exemple le brevet canadien 1.150.461 décrit un matériau comprenant :
- une couche interne de copolymère de styrène et d'anhydride maléique,
- une couche externe de copolymère d'acrylonitrile et d'acrylate de méthyle, et
- une couche intermédiaire de copolymère d'éthylène et d'acétate de vinyle.

Dans le EP-A-0174611 est décrit un tube tricouche barrière à l'oxygène obtenu par coextrusion de polyoléfine, contenant des motifs siloxane réticulés après la coextrusion et de copolymère éthylène-acétate de vinyle saponifié.

Le principal problème posé par les matériaux multicouches est celui de leur adhésion. En effet, il faut éviter que les différentes couches ne se délaminent pendant ou immédiatement après la fabrication du matériau, ou encore après usage du matériau.

La présente invention concerne un matériau polymère multicouches à propriétés barrière contenant une couche (a) d'un polymère à propriétés barrières et une couche (b) de copolymère de styrène et d'anhydride maléique, caractérisé par le fait que le polymère de la couche (a) est un copolymère d'éthylène et d'alcool polyvinylique et en ce que ledit matériau comprend en outre une couche (c) d'un copolymère d'éthylène contenant des motifs dérivés d'un anhydride d'acide dicarboxylique insaturé, la couche (c) étant en contact avec la couche (a).

Selon la présente invention, le copolymère de la couche (c) peut être notamment :
- un copolymère d'éthylène et d'anhydride maléique, obtenu par copolymérisation radicalaire sous haute pression ou bien par greffage d'anhydride maléïque sur le polyéthylène,
- un terpolymère d'éthylène, d'anhydride maléique et d'au moins un acrylate d'alkyle dont le groupe alkyle a de 2 à 6 atomes de carbone, ou encore
- un mélange de polyéthylène et du copolymère ou terpolymère ci-dessus.

Le matériau polymère multicouches selon l'invention peut donc présenter la structure b-c-a ou bien, de préférence, b-a-c.

Pour certains usages il peut être avantageux que le matériau polymère multicouche selon l'invention comporte en outre une couche (d) de polyéthylène en contact avec la couche (c).

La demanderesse a trouvé que dans les matériaux polymères multicouches selon l'invention, l'adhérence entre les différentes couches est satisfaisante pour les utilisations habituelles de ces matériaux. En particulier l'adhésion entre les couches (a) et (c) est excellente. Le matériau obtenu a également une bonne résistance à la température et de bonnes propriétés mécaniques. De plus il faut remarquer qu'il est possible d'augmenter l'épaisseur de la couche (a) pour améliorer les propriétés barrière tout en conservant une épaisseur raisonnable pour le matériau.

Le copolymère d'éthylène et d'alcool polyvinylique constituant la couche (a) est de préférence un copolymère contenant entre 30 et 50 % en moles d'éthylène. Il constitue dans le produit fini une couche dont l'épaisseur peut varier entre 20 μm et 1,5 mm environ, les épaisseurs voisines de 20 μm étant de préférence obtenues par extrusion et les épaisseurs voisines de 1,5 mm étant de préférence obtenues par moulage par compression à chaud sur une presse hydraulique.

Le copolymère d'anhydride maléique et de styrène constituant la couche (b) comporte de préférence de 4 à 12 % en poids d'anhydride maléïque et peut, le cas échéant, être greffé sur un élastomère polyoléfinique insaturé tel qu'un polybutadiene ou un terpolymère d'éthylène avec au moins une α-oléfine ayant de 3 à 6 atomes de carbone et au moins un diène (un exemple étant constitué notamment par un terpolymère comprenant

2

de 15 à 60 % en moles de motifs dérivés du propylène et de 0,1 % à 20 % en moles de motifs dérivés du diène). L'élastomère éventuellement présent représente au plus 20 % en poids par rapport au styrène. L'épaisseur de la couche (b) dans le produit fini peut varier entre 100 µm et 1,5 mm environ.

Le copolymère de la couche (c) comprend de préférence de 0,3 à 20 % environ en moles d'anhydride maléique (et de préférence au plus 3 % en moles dans le cas d'un copolymère non greffé) et peut en outre comprendre, le cas échéant, de 1 à 15 % environ en moles d'acrylate d'alkyle, le reste étant pour l'essentiel constitué d'éthylène. Il possède de préférence un indice de fluidité (mesuré selon la norme ASTM-D 1238-73) compris entre 1 et 50 dg/min. L'épaisseur de la couche (c) dans le produit fini peut varier entre 20 µm et 1,5mm environ.

Selon l'invention la couche (c) peut également être constituée d'un mélange comprenant au moins 50 % en poids du copolymère d'éthylène et d'anhydride maléique défini ci-dessus et au plus 50 % en poids de polyéthylène, tel que décrit notamment dans la demande de brevet européen publiée sous le n° 0.222.789. Un tel mélange peut être obtenu par tout moyen connu, tel que malaxeur, mélangeur interne ou extrudeuse.

Les exemples non limitatifs donnés ci-après illustrent l'invention.

Dans ces exemples la force de pelage est la force de traction (mesurée en Newtons) à exercer pour désolidariser l'interface de deux couches jointives d'une éprouvette multicouche de dimensions égales à 130 x 15 x 1 mm.

## Préparation des éprouvettes.

On introduit des granulés des produits servant à la réalisation de l'éprouvette au centre d'un cadre intercalaire de 1 mm d'épaisseur, lui-même placé entre les plateaux (40 x 40 cm), chauffés électriquement, d'une presse hydraulique de type AUTOMACT-60 tonnes. On effectue un préchauffage des granulés pendant 3 minutes à une température T, puis on applique une pression hydraulique machine de 20 MPa pendant 3 minutes sur les granulés. Le refroidissement est assuré sur une presse annexe OLIER type 510 R sous 10 MPa. On obtient ainsi une plaque éprouvette de dimensions correspondant au volume laissé libre par le cadre intercalaire, c'est à dire 300 x 300 x 1 mm.

Enfin ou découpe dans cette plaque éprouvette, au moyen d'un massicot (ou d'une scie pour les éprouvettes de copolymère d'éthylène et d'alcool polyvinylique), des éprouvettes de dimensions 130 x 15 x 1 mm.

La température T est égale à 220°C pour la préparation des éprouvettes de copolymère d'éthylène et d'alcool polyvinylique et à 200°C pour la préparation de toutes les autres éprouvettes.

## Préparation des échantillons multicouches.

Les éprouvettes sont jointives sur la moitié de leur longueur. Cette jonction est effectuée en plaçant ces éprouvettes dans un cadre intercalaire dont l'épaisseur est égale à la somme des épaisseurs de chaque éprouvette prise individuellement, ce cadre est placé lui-même entre les plateaux de la presse ayant servi à la réalisation des éprouvettes.

Les plateaux de cette presse sont portés à une température t précisée dans les exemples ci-après.

Les échantillons sont soumis à une pression hydraulique machine égale à 20 MPa. Sur les autres moitiés de longueur des éprouvettes sont intercalées des feuilles de polyester pour éviter la jonction de deux éprouvettes voisines.

## EXEMPLE 1.

On prépare selon le mode opératoire décrit ci-dessus un échantillon constitué de :

a) une couche de copolymère d'éthylène et d'alcool polyvinylique commercialisé par la Société MITSUI sous la marque EVAL EPF 104.

b) une couche de copolymère de styrène et d'anhydride maléique greffé sur élastomère commercialisé par la Société ARCO sous la marque DYLARK 700.

c) une couche ($c_1$) en contact avec la couche (a) constituée d'un terpolymère comprenant 91 % en poids d'éthylène, 6 % en poids d'acrylate d'éthyle et 3 % en poids d'anhydride maléique, commercialisé par la société NORSOLOR sous la marque LOTADER 3200 et ayant un indice de fluidité de 5 dg/min.

En fonction de la température t, les épaisseurs (exprimées en µm) des différentes couches de l'échantillon, ainsi que les forces de pelage (exprimées en Newtons) $P_{ab}$ entre les couches (a) et (b) et $P_{ac}$ entre les couches (a) et ($c_1$) sont indiquées au tableau I ci-après.

TABLEAU I

| t | (a) | (b) | (c) | $P_{ab}$ | $P_{ac}$ |
|---|---|---|---|---|---|
| 200 | 300 | 900 | 100 | n.d | 29,4 |
| 220 | 200 | 800 | 70 | 5,89 | 22,6 |
| 240 | 150 | 700 | 40 | n.d | 23,5 |

n.d : non déterminé

**EXEMPLE 2.**

On prépare un échantillon multicouches constitué de :
- deux couches (a) et (b) de natures identiques à celles de l'exemple 1, et
- une couche $(c_2)$ composée d'un copolymère greffé d'éthylène et d'anhydride maléique commercialisé par la société MITSUI sous la marque ADMER L 200.

En fonction de la température t, les épaisseurs (exprimées en $\mu$m) des différentes couches ainsi que les forces de pelage $P_{ac}$ entre les couches (a) et $(c_2)$ sont indiquées au tableau II ci-après.

TABLEAU II

| t | (a) | (b) | (c) | $P_{ac}$ |
|---|---|---|---|---|
| 200 | 300 | 900 | 100 | 21,6 |
| 220 | 200 | 800 | 70 | 44,2 |
| 240 | 150 | 700 | 50 | 46,1 |

**EXEMPLE 3**

On prépare un échantillon multicouches ayant :
- deux couches (a) et (b) de natures identiques à celles de l'exemple 1, et
- une couche $(c_3)$ d'un copolymère comprenant 97% du poids d'éthylène et 3% en poids d'anhydride maléique préparé par un procédé radicalaire.
- une couche (d) de polyéthylène basse densité radicalaire commercialisé par la société NORSOLOR sous la dénomination LOTRENE MA 0701.

En fonction de la température t, les épaisseurs des couches (exprimés en $\mu$m) et les forces de pelage (exprimées en Newtons) $P_{ac}$ entre (a) et $(c_3)$ et $P_{dc}$ entre (d) et $(c_3)$ sont indiquées au tableau III ci-après.

EP 0 349 440 B1

## TABLEAU III

| t | (a) | (b) | (c) | $P_{ab}$ | $P_{ac}$ |
|---|---|---|---|---|---|
| 220 | 200 | 800 | 70 | 17,7 | 19,6 |
| 240 | 150 | 700 | 40 | 41,2 | n.d. |

n.d. : non déterminé

**EXEMPLE 4**

On prépare un échantillon comportant :
- deux couches (a) et (b) de natures identiques à celles de l'exemple 1, et d'épaisseurs respectives 200 μm et 800 μm.
- une couche $(c_4)$ d'épaisseur 70 μm d'un mélange constitué de 25% en poids du polyéthylène basse densité mentionné à l'exemple 3 et de 75% en poids du copolymère d'éthylène et d'anhydride maléique utilisé dans l'exemple 3.

La force de pelage entre les couches (a) et $(c_4)$ est de 33,4 N à 220°C.

**EXEMPLE 5 (comparatif)**

On prépare un échantillon ayant :
- deux couches (a) et (b) de natures identiques à celle de l'exemple 1.
- une couche $(c_5)$ constitué du polyéthylène basse densité mentionné à l'exemple 3.

En fonction de la température t, les épaisseurs (exprimées en μm) des différentes couches et les forces de pelage $P_{ac}$ entre (a) et $(c_5)$ et $P_{ab}$ entre (a) et (b) sont indiquées au tableau IV ci-après.

## TABLEAU IV

| t | (a) | (b) | (c) | $P_{ac}$ | $P_{ab}$ |
|---|---|---|---|---|---|
| 200 | 300 | 900 | 100 | 1,96 | n.d |
| 220 | 200 | 800 | 70 | n.d | 5,89 |

n.d : non déterminé

**EXEMPLE 6 (comparatif)**

On prépare un échantillon multicouche comprenant :
- deux couches (a) et (b) de natures identiques à celles de l'exemple 1, d'épaisseurs respectives 200 μm et 800 μm,
- une couche $(c_6)$ constituée d'un copolymère comprenant 72 % d'éthylène et 28 % en poids d'acétate de vinyle, d'épaisseur 70 μm.

La force de pelage entre les couches (a) et $(c_6)$ est de 12,8 N à 220°C.

## Revendications

1.  Matériau polymère multicouches à propriétés barrière contenant une couche (a) d'un polymère à proprié-

5

tés barrières et une couche (b) de copolymère de styrène et d'anhydride maléique, caractérisé par le fait que le polymère de la couche (a) est un copolymère d'éthylène et d'alcool polyvinylique et en ce que ledit matériau comprend en outre une couche (c) d'un copolymère d'éthylène contenant des motifs dérivés d'un anhydride d'acide dicarboxylique insaturé, la couche (c) étant en contact avec la couche (a).

2. Matériau selon la revendication 1, caractérisé en ce que le copolymère de la couche (c) est un copolymère d'éthylène et d'anhydride maléïque.

3. Matériau selon la revendication 2, caractérisé en ce que ledit copolymère est un copolymère greffé comprenant de 0,3 à 20 % en moles d'anhydride maléique.

4. Matériau selon la revendicaiton 2, caractérisé en ce que ledit copolymère comprend de 0,3 à 3 % en moles d'anhydride maléique.

5. Matériau selon la revendication 4, caractérisé en ce que ledit copolymère comprend en outre au moins un acrylate d'alkyle dont le groupe alkyle a de 2 à 6 atomes de carbone.

6. Matériau selon la revendication 5, caractérisé en ce que ledit copolymère comprend de 1 à 15 % en moles d'acrylate d'alkyle.

7. Matériau selon l'une des revendications 1 à 6, caractérisé en ce qu'il présente une structure b-a-c.

8. Matériau selon l'une des revendications 1 à 7, caractérisé en ce que l'épaisseur de la couche (c) est comprise entre 20 $\mu$m et 1,5 mm.

9. Matériau selon la revendication 2, caractérisé en ce que le copolymère d'éthylène et d'anhydride maléique est en mélange avec du polyéthylène.

10. Matériau selon l'une des revendications 1 à 9, caractérisé en ce qu'il comporte en outre une couche (d) de polyéthylène en contact avec la couche (c).


## Patentansprüche

1. Polymerer Verbundwerkstoff mit Barriereigenschaften, der eine Schicht (a) eines Polymeren mit Barriereigenschaften enthält und eine Schicht (b) eines Copolymeren aus Styrol und Maleinsäureanhydrid, dadurch gekennzeichnet, daß das Polymere der Schicht (a) ein Copolymeres aus Ethylen und Poly(vinyalkohol) darstellt und wobei das genannte Material darüberhinaus eine weitere Schicht (c) aus einem Copolymeren des Ethylens mit Einheiten eines ungesättigten Dicarbonsäureanhydrids enthält und wobei die Schicht (c) mit der Schicht (a) verbunden ist.

2. Verbundwerkstoff nach Anspruch 1, dadurch gekennzeichnet, daß das Copolymere der Schicht (c) ein Copolymeres aus Ethylen und Maleinsäureanhydrid ist.

3. Verbundwerkstoff nach Anspruch 2, dadurch gekennzeichnet, daß das genannte Copolymere ein gepfropftes Copolymeres darstellt, welches 0,3 bis 20 Molprozent Maleinsäureanhydrid enthält.

4. Verbundwerkstoff nach Anspruch 2, dadurch gekennzeichnet, daß das genannte Copolymere 0,3 bis 3 Molprozent Maleinsäureanhydrid enthält.

5. Verbundwerkstoff nach Anspruch 4, dadurch gekennzeichnet, daß das genannte Copolymere darüberhinaus mindestens ein Alkylacrylat mit einer Alkylgruppe von 2 bis 6 Kohlenstoffatomen enthält.

6. Verbundwerkstoff nach Anspruch 5, dadurch gekennzeichnet, daß das genannte Copolymere zwischen 1 und 15 Mol Alkylacrylat enthält.

7. Verbundwerkstoff nach einem der Ansprüche 1 bis 6 dadurch gekennzeichnet, daß er eine Struktur b-a-c besitzt.

8. Verbundwerkstoff nach einem der Ansprüche 1 bis 7, dadurch gekennzeichnet, daß die Dicke der Schicht

(c) zwischen 20 μm und 1,5 mm beträgt.

9. Verbundwerkstoff nach Anspruch 2, dadurch gekennzeichnet, daß das Copolymere aus Ethylen und Maleinsäureanhydrid mit Polyethylen vermischt wird.

10. Verbundwerkstoff nach einem der Ansprüche 1 bis 9, dadurch gekennzeichnet, daß er darüberhinaus eine Schicht (d) aus Polyethylen enthält, die mit der Schicht (c) verbunden ist.

## Claims

1. A multi-layer polymer material having barrier properties, containing a layer (a) of a polymer having barrier properties and a layer (b) of a copolymer of styrene and maleic anhydride, characterized in that the polymer of the layer (a) is a copolymer of ethylene and polyvinyl alcohol, and said material also comprises a layer (c) of a copolymer of ethylene containing units derived from an anhydride of unsaturated dicarboxylic acid, the layer (c) being in contact with the layer (a).

2. A material according to claim 1, characterized in that the copolymer of the layer (c) is a copolymer of ethylene and maleic anhydride.

3. A material according to claim 2, characterized in that said copolymer is a graft copolymer comprising from 0.3 to 20% moles of maleic anhydride.

4. A material according to claim 2, characterized in that said copolymer comprises from 0.3 to 3% moles of maleic anhydride.

5. A material according to claim 4, characterized in that said copolymer also comprises at least one alkyl acrylate whose alkyl group has from 2 to 6 carbon atoms.

6. A material according to claim 5, characterized in that said copolymer comprises from 1 to 15% moles of alkyl acrylate.

7. A material according to one of claims 1 to 6, characterized in that it has a b-a-c structure.

8. A material according to one of claims 1 to 7, characterized in that the thickness of the layer (c) is between 20 μm and 1.5 mm.

9. A material according to claim 2, characterized in that the copolymer of ethylene and maleic anhydride is mixed with polyethylene.

10. A material according to one of claims 1 to 9, characterized in that it also comprises a layer (d) of polyethylene in contact with the layer (c).